# EUROPEAN PATENT SPECIFICATION

(11) **EP 1 908 983 B1**
(45) Date of publication and mention of the grant of the patent: **17.03.2010**
(21) Application number: 06125135.1
(22) Date of filing: 30.11.2006
(51) Int. Cl.: F16F 3/10, F16F 3/00, F16F 15/067

(54) **Levelling and damping system for vibrations**
Niveauregulierungs- und Dämpfungssystem für Schwingungen
Système de mise à niveau et d'amortissement de vibrations

(30) Priority: 06.10.2006 ES 200602551
(43) Date of publication of application: 09.04.2008
(73) Proprietor: Suspensiones Elasticas del Norte, S.L., 14700 Palma del Rio, Córdoba (ES)
(72) Inventor: Muñoz Molina, Juan, 14700, Palma del Río (ES)
(74) Representative: Pons Ariño, Angel

(56) References cited:
- EP-A- 1 548 319
- DE-A1- 10 205 788
- DE-U1- 7 617 012
- FR-A- 1 479 413

## Description

The present invention refers to a vibration levelling and damping system as defined in the preamble of claim 1 and known from DE-A-102 05 788 that, besides the damping function, is capable of levelling the height and inclination of the platform where the aforementioned machine is supported. This system additionally provides greater stability in the supporting of the machine.

### STATE OF THE PREVIOUS ART

The disadvantages caused by large-sized machines that make vibrations during their functioning are well known. There exists the possibility that these vibrations, according to their frequency and amplitude, are transmitted through the base of the aforementioned machine or the elements that support it and reach the ground. These vibrations may be transmitted through the ground and may even lead to serious problems in the functioning of other devices situated nearby.

One of the possible solutions involves supporting the equipment on damping devices capable of absorbing the vibrations caused, so that these vibrations are eliminated or reduced.

A damping device of this type is the Vibrabsorber ® system, available commercially, that consists of a kind of sandwich made up of a lower and an upper plate base, inserting a set of springs between both. In the upper part of the base, and in its centre, there is an opening to fix a grub screw with nuts and washers. The leg or support of the machine rests on the lower nut-washer unit. Another way to carry out this connection is to directly support the machine on the upper base.

Another example of a damping device used to resolve the previously mentioned disadvantages is the AM series, commercialised by Eddo Comfort Products. This damping device consists of a set of insulators in parallel fitted between two plates, the upper plate having a central opening to join a central grub screw. Its most outstanding feature is the lateral shielding that limits the rocking of the insulator when confronting recurrent forces under dynamic working conditions. On the other hand, it has a rubber plate inside the shielding that dampens through friction, dispersing part of the vibratory energy through heat. In this case, the machine also rests on the upper surface or is joined to a central grub screw.

One more example of a damping system is described in Spanish patent application ES 2235649, by the same inventor of the present patent application. A damping device is described in this document that consists of a set of insulators arranged in parallel between two platforms, one of them joined to the machine and the other to the ground. It also has lateral stabilizers that prevent horizontal movement of the machine, without impeding its vertical movement.

### DESCRIPTION OF THE INVENTION

The aim of the system according to the present invention is to dampen vibrations caused by a machine in a stable way so that they are not transmitted to the ground, providing a levelling mechanism for the support of the aforementioned machine at the same time.

According to an aspect of the present invention, there is a vibration levelling and damping system that includes a lower platform, an intermediate platform, damping units fixed between both platforms and a central grub screw that is joined to the intermediate platform. This system also comprises an upper platform joined to the central grub screw and, at least, three perimetral scrub screws for levelling the above-mentioned upper platform. The upper platform has a central hole to join the central grub screw.

The term "level", in the present description, includes both the levelling of the inclination angle of the upper surface and levelling in height.

The term "join" refers to any connection between a pin and a piece through a hole made in the piece that allows the position of the pin in the hole to be adjusted. An example of a connection like this would be a screwed coupling or by means of thread. Besides, aimed at fixing the pin to the piece in the desired position, these couplings preferably have nut and locking nut, together with their corresponding washers. A connection of this type using a screw, locking nut and washers could also be used. As a result, it is clear that the upper platform in the present invention may be moved lengthways along the central grub screw to which it is joined.

On speaking of "fix", any rigid connection between two pieces is referred to. This connection might be, for example, a threaded coupling to which fixing means have been added, such as nut and locking nut, or a threaded joint by means of suitably tightened screws or bolts.

An advantage of the present invention consists in that the means to level the upper platform together with the central grub screw, when the system is loaded, create a rigid connection between the intermediate and upper platforms, so that both make up a compact block. In this way, when the system is loaded, both platforms remain in the same position relative to each other. Thus, there is improved stability in the support of the machine.

The means to level the upper platform comprise perimetral grub screws. These perimetral grub screws preferably consist of threaded rods or screws that keep the distance constant between the upper and intermediate surfaces, preventing any relative movement between them when the new vibration levelling and damping system is in operation. The perimetral grub screws are at least three and are joined to the intermediate platform. In this way, the height of the perimetral grub screws is adjustable, so that their upper end reaches the lower surface of the upper platform. Thus, the upper platform resting on the above-mentioned perimetral grub screws is achieved, which, added to the central grub screw, creates several points of support for the upper surface. This gives the upper surface high stability when facing vibrations transmitted by the machine. To fix the grub screws firmly into the intermediate platform at the desired height, as previously mentioned, locking nuts and washers are preferably to be used.

An additional advantage of the present invention consists of the fact that it allows the height and inclination of the upper platform to be modified. Among others, this gives it the advantage that a machine placed on an inclined area resting on the system in the present invention stays in a horizontal position in a stable and safe way.

To level the upper platform, the height that the above-mentioned upper platform is to have to overcome a specific inclination has to be decided. Then the position of the above-mentioned upper platform is vertically modified along the central grub screw and is fixed, with nuts and locking nuts, into the desired position. Afterwards, the vertical position of the perimetral grub screws are modified until they touch the lower surface of the central platform and push it up to obtain the desired inclination.

The intermediate platform comprises holes to join the perimetral grub screws and join the central grub screw. The holes for the perimetral grub screws are preferably located near the perimeter of the intermediate platform, always remaining inside the vertical projection of the upper platform. Thus, one ensures that on raising the perimetral grub screws, their upper ends are supported on the upper platform. The hole to join the central grub screw is preferably positioned in the centre of the intermediate platform.

The lower platform may be fixed to the ground or wall using appropriate means, such as glues, cement or others. Nevertheless, a preferred embodiment of the present invention considers holes for fixing it to the ground or wall and to fix the damping units.

In another preferred embodiment of the present invention, the shape of the lower and intermediate platforms is designed according to the damping units. The platforms preferably have a circular or polygonal shape that is adaptable to the outer contours of the damping units, also providing a rounded area on the lower platform, where the holes to fix them to the ground or wall, are. In this way, the fixing operation is simplified, since it prevents the upper platform from being on the vertical part of the above-mentioned screw holes, allowing the use of tools such as a screwdriver, automatic screwdriver, or others.

The lower, intermediate and upper platforms may be made up of any rigid, resistant material, though metal is preferably to be used.

In turn, the damping units preferably comprises one o more elastic devices, preferably four. These damping units are formed by two plates, upper and lower, between which the elastic devices are inserted and fixed to the aforementioned plates. The elastic devices may be any type of elastic device such as pieces of India rubber or rubber, though springs are preferably to be used. The hardness, elasticity or elasticity coefficient of the elastic devices may vary depending on the weight of the machine that is going to be supported on the damping system. The above-named elastic devices rest on bases, preferably India rubber and/or rubber, arranged on the plates, the hardness or elasticity coefficient of which may also vary, thus facilitating a more uniform, stable support on the plates. An additional effect is that depending on the hardness or elasticity coefficient of both the elastic devices and bases, acoustic insulation optimisation of the damping system to certain frequencies may be achieved as well.

The damping devices preferably also have lateral stabilizers. These lateral stabilizers are formed by flaps, preferably of a rectangular shape, which jut out from the upper and lower plates of the damping devices. A certain number of flaps are preferably made available in the lower plate, covered with India rubber or rubber, with the same number of flaps in the upper plate. When the system is loaded, these flaps remain face to face, thus impeding twisting movement of the damping unit. The overall effect of the lateral stabilizers on the complete system is to prevent sudden movements different from vertical ones, especially during machine startup. In this way, the disadvantage of breakage occasionally produced in pipes and rigid ducts when, for example, electrical engines with strong start-up torque are started up, is avoided.

Another preferred embodiment of the invention also includes an elastic base pad on the bottom, preferably manufactured from India rubber and/or rubber. This bottom pad is fixed to the lower surface of the lower platform and helps to obtain better support for the damping system on rough surfaces, such as grounds with flaws or that are not completely clean.

Throughout the description and claims, the word "comprise" and its variations do not mean to exclude other technical characteristics, means or equipment. For experts on the subject, light will be shed as to other aims, advantages and characteristics of the invention, partly from the description and partly from practice with the invention. The following examples and drawings are provided as an illustration, and are by no means restrictive in the present invention.

### BRIEF DESCRIPTION OF THE DRAWINGS

Fig. 1 shows the vibration levelling and damping system in accordance with the present invention.
Fig. 2 shows a detail of the vibration levelling and damping system in accordance with the present invention.
Fig. 3 shows an upper view of the vibration levelling and damping system in accordance with the present invention.
Fig. 4 shows a lower view of the vibration levelling and damping system in accordance with the present invention.
Fig. 5 shows a front view of the vibration levelling and damping system in accordance with the present invention.
Fig. 6 shows a closer-up view of the vibration levelling and damping system in accordance with the present invention.

### DETAILED EXPLANATION OF A WAY TO EMBODY THE INVENTION

Following is a description of a specific embodiment of the invention, referring to the attached drawings.

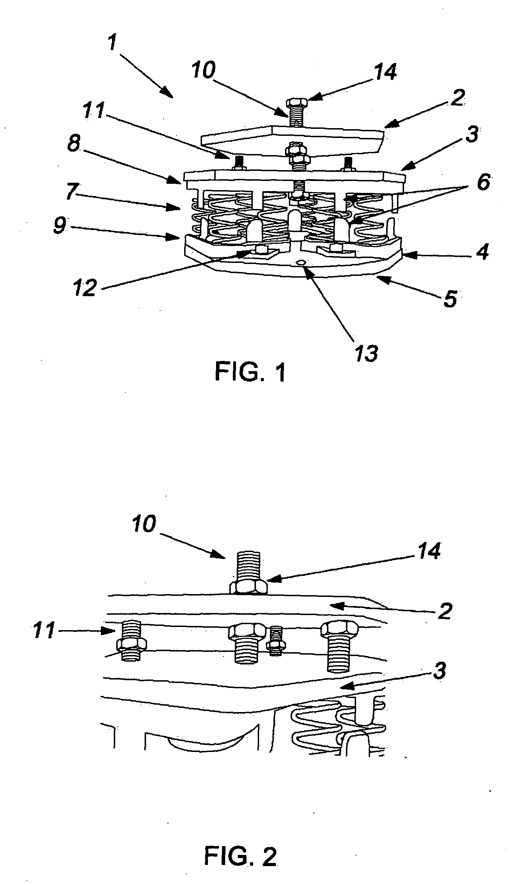

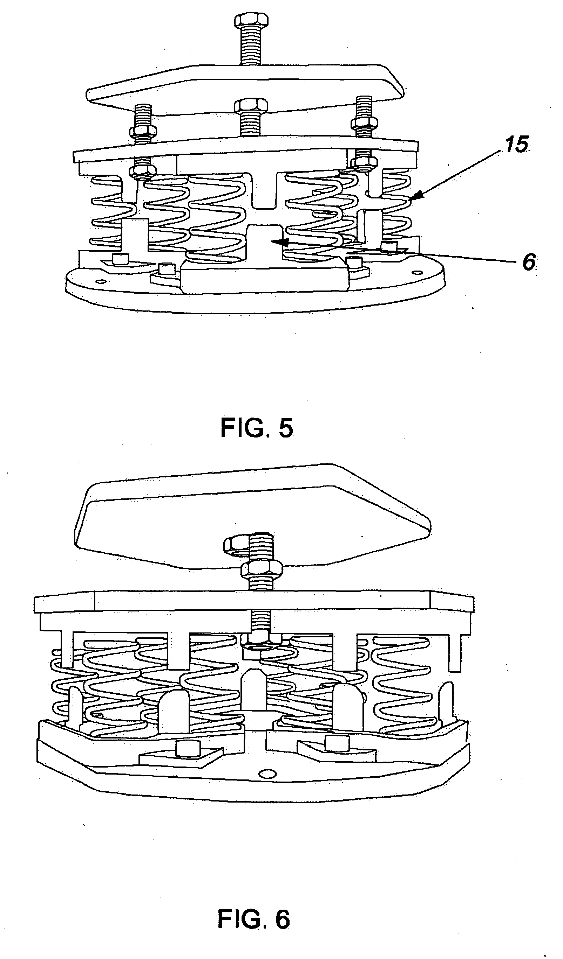

Figure 1 shows a general view of the new vibration levelling and damping system (1) in accordance with the present invention. The lower (4), intermediate (3) and upper (2) platforms may be seen in the drawing. We observe that the upper platform (2) is joined to the central grub screw (10) and has a nut (14) and locking nut for its fixing to the above-mentioned platform (2 above). Though not observed in the drawing, it also has the corresponding washers. The perimetral grub screws (11) that jut out above and below the intermediate platform (3) may also be seen. These perimetral grub screws (11) also have locking nut and washer. Below the intermediate platform (3), the damping units (7) are located. In this embodiment, three damping units (7) have been used, each of which comprises four elastic devices, in this case springs (15). These springs are fixed to the upper (8) and lower (9) plates, and rest on bases (16) of India rubber or rubber. Bolts or screws (12) that fix the damping units (7) to the lower platform (4) are fitted to flaps that jut out from the lower plate (9) of the damping units (7). Though it is not observed in the drawing, there are also means to fix the units (7) to the intermediate platform (3). The lateral stabilizers (6), four per each damping unit (7), may also be seen. These lateral stabilizers (6) consist in rectangular-shaped flaps that jut out from the outer edges of the upper (8) and lower (9) plates, as may more closely be appreciated in Figure 5. When the system (1) is loaded, the upper and lower lateral flaps remain face to face, restricting lateral movements of the unit (7). The overall effect on the complete system (1) is the restriction of system movement (1) that is different from its natural vertical-direction working movement. In this way, problems that arise when sudden movement of machines due to hammering suffered by the starting of certain machines, such as large electrical engines, for example, are resolved.

The elastic base pad on the bottom (5) may also be seen under the bottom plate of the system, fixed to the lower surface of the lower platform (4). This bottom elastic base pad (4) enables the system (1) to support itself better on the surface where it is going to work, in the case where it is rough or not completely clean.

Following is a description of the functioning of the system (1). First, the lower platform (4) is fixed to the working area by means of suitable bolts or screws, which do not appear in the drawings. Next, the desired height of the upper platform (2) is adjusted by the central grub screw (10) and is fixed to it by using a nut (14) and locking nut, with their corresponding washers.

Finally, the height of the perimetral grub screws (11) is adjusted until they touch the lower surface of the upper platform (2) and situated at the suitable position to obtain the desired inclination angle of the upper platform (2).

In Figure 2, it is possible to observe a detail of how the upper platform (2) is supported on the perimetral grub screws (11).

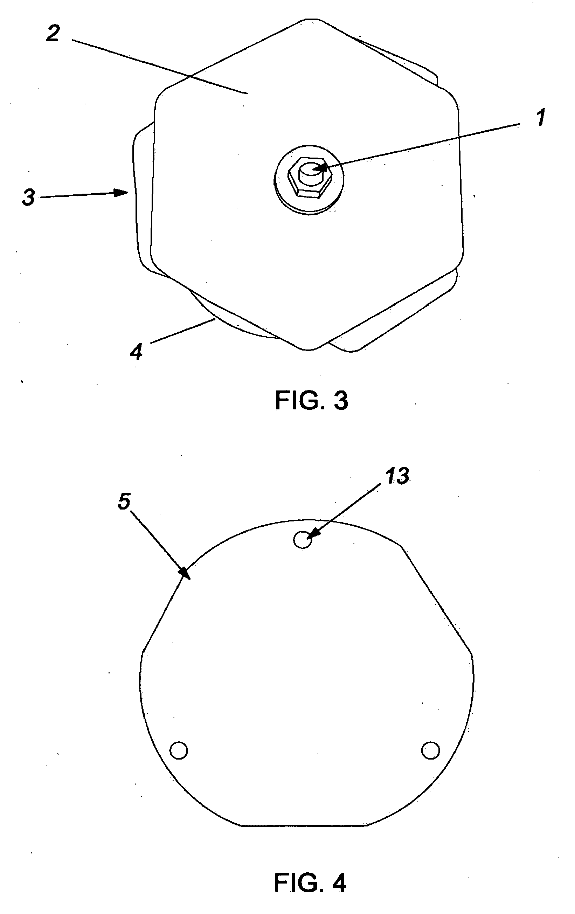

Figure 3 shows an upper view of the system (1) in accordance with the present invention. The upper platform (2) may be observed in the foreground, and, almost completely covered by it, part of the edge of the intermediate platform (3) and part of the edge of the lower platform (4) may be seen. The central grub screw (10) may also be seen.

Figure 4 shows a lower view of the system (1) in accordance with the present invention, where the bottom elastic pad (5) and lower platform (4) screw holes (13) may be seen.

Figure 5 shows another general view of the system (1) in accordance with the present invention.

Figure 6 shows another general view of the system (1) in accordance with the present invention, from a close-up angle.

## Claims

1. A vibration levelling and damping system (1) that comprises a lower platform (4), an intermediate platform (3), damping units (7) fixed between both platforms and a central grub screw (10) that is joined to the intermediate platform (3), the system comprising an upper platform (2) joined to the central grub screw (10) **characterized in that**, the system further comprises at least, three perimetral grub screws (11) for levelling the above-mentioned upper platform (2).

2. The system (1), in accordance with claim 1, where the perimetral grub screws (11) are joined to the intermediate platform (3).

3. The system (1), in accordance with any of the previous claims, where the perimetral grub screws (11) are adjusted in height to the upper platform (2).

4. The system (1), in accordance with any of the previous claims, where the upper platform comprises a central hole to join the central grub screw.

5. The system (1), in accordance with any of the previous claims, where the intermediate platform (3) comprises holes for the perimetral grub screws (11) and the central grub screw (10).

6. The system (1), in accordance with any of the previous claims, where the lower platform (4) comprises holes (13) for its fixing to the ground or wall and to fix the damping units (7).

7. The system (1), in accordance with any of the previous claims, where the lower (4), intermediate (3) and upper (2) platforms are made of metal.

8. The system (1), in accordance with any of the previous claims, **characterized by** having at least three damping units (7).

9. The system (1), in accordance with claim 8, where the damping units (7) comprise one o more elastic devices (15).

10. The system (1), in accordance with claim 9, where the damping units (7) are made of two plates, upper (8) and lower (9), between which the elastic devices (15) are inserted.

11. The system (1), in accordance with claim 9 or 10, where the damping units (7) also comprise lateral stabilizers (6).

12. The system (1), in accordance with any of claims 9 to 11, where the damping units (7) have from 2 to 6 elastic devices (15).

13. The system (1), in accordance with claim 12, where the damping devices (7) have four (15) elastic devices.

14. The system (1), in accordance with any of claims 9 to 13, where the elastic devices (15) are springs.

15. The system (1), in accordance with any of the previous claims, which also comprises a bottom elastic pad (5) fixed to the lower surface of the lower platform (4).

16. The system (1), in accordance with claim 15, where the bottom elastic pad (5) is made of rubber.

## Patentansprüche

1. Ein System zum Vibrationsausgleich und zur Dämpfung (1), das eine untere Plattform (4), eine mittlere Plattform (3), Dämpfungseinheiten (7), die zwischen den beiden Plattformen befestigt sind, und einen zentralen Gewindestift (10), der mit der mittleren Plattform (3) verbunden ist, umfasst, wobei das System eine obere Plattform (2), die mit dem zentralen Gewindestift (10) verbunden ist, umfasst, **dadurch gekennzeichnet, dass** das System ferner mindestens drei perimetrale Gewindestifte (11) zum Ausgleich der oben genannten oberen Plattform (2) umfasst.

2. Das System (1) nach einem der vorhergehenden Ansprüche, wobei die perimetralen Gewindestifte (11) mit der mittleren Plattform (3) verbunden sind.

3. Das System (1) nach einem der vorhergehenden Ansprüche, wobei die perimetralen Gewindestifte (11) auf die Höhe der oberen Plattform (2) angepasst sind.

4. Das System (1) nach einem der vorhergehenden Ansprüche, wobei die obere Plattform ein mittleres Loch umfasst, um mit dem zentralen Gewindestift verbunden zu werden.

5. Das System (1) nach einem der vorhergehenden Ansprüche, wobei die mittlere Plattform (3) Löcher für die perimetralen Gewindestifte (11) und für den zentralen Gewindestift (10) umfasst.

6. Das System (1) nach einem der vorhergehenden Ansprüche, wobei die untere Plattform (4) Löcher (13) zu deren Befestigung am Boden oder an der Wand und zur Befestigung der Dämpfungseinheiten (7) umfasst.

7. Das System (1) nach einem der vorhergehenden Ansprüche, wobei die untere (4), die mittlere (3) und die obere (2) Plattform aus Metall hergestellt sind.

8. Das System (1) nach einem der vorhergehenden Ansprüche, **dadurch gekennzeichnet, dass** es über mindestens drei Dämpfungseinheiten (7) verfügt.

9. Das System (1) nach Anspruch 8, wobei die Dämpfungseinheiten (7) eine oder mehrere elastische Vorrichtungen (15) umfassen.

10. Das System (1) nach Anspruch 9, wobei die Dämpfungseinheiten (7) aus zwei Platten bestehen, einer oberen (8) und einer unteren (9), zwischen denen die elastischen Vorrichtungen (15) eingefügt sind.

11. Das System (1) nach Anspruch 9 oder 10, wobei die Dämpfungseinheiten (7) außerdem über seitliche Stabilisatoren (6) verfügen.

12. Das System (1) nach einem der Ansprüche 9 bis 11, wobei die Dämpfungseinheiten (7) über 2 bis 6 elastische Vorrichtungen (15) verfügen.

13. Das System (1) nach Anspruch 12, wobei die Dämpfungseinrichtungen (7) über vier elastische Vorrichtungen (15) verfügen.

14. Das System (1) nach einem der Ansprüche 9 bis 13, wobei die elastischen Vorrichtungen (15) Federn sind.

15. Das System (1) nach einem der vorhergehenden Ansprüche, wobei dieses außerdem ein unteres elastisches Pad (5), das an der Unterseite der unteren Plattform (4) befestigt ist, umfasst.

16. Das System (1) nach Anspruch 15, wobei das untere elastische Pad (5) aus Gummi hergestellt ist.

## Revendications

1. Un système vibrant de nivellement et d'amortissement (1) qui comprend une plateforme inférieure (4), une plateforme intermédiaire (3), des unités d'amortissement (7) fixées entre les deux plateformes et une vis sans tête centrale (10) qui est assemblée à la plateforme intermédiaire (3), le système comprenant une plateforme supérieure (2) assemblée à la vis sans tête centrale (10), **caractérisé en ce que** le système comprend en outre au moins, trois vis sans tête périphériques (11) pour niveler la plateforme supérieure (2) mentionnée ci-dessus.

2. Le système (1), conformément à la revendication 1, où les vis sans tête périphériques (11) sont assemblées à la plateforme intermédiaire (3).

3. Le système (1), conformément à n'importe laquelle des revendications précédentes, où les vis sans tête périphériques (11) sont ajustées en hauteur à la plateforme supérieure (2).

4. Le système (1), conformément à n'importe laquelle des revendications précédentes, où la plateforme supérieure comporte un trou central pour assembler la vis sans tête centrale.

5. Le système (1), conformément à n'importe laquelle des revendications précédentes, où la plateforme intermédiaire (3) comporte des trous pour les vis sans tête périphériques (11) et la vis sans tête centrale (10).

6. Le système (1), conformément à n'importe laquelle des revendications précédentes, où la plateforme inférieure (4) comporte des trous (13) pour sa fixation au sol ou au mur et pour fixer les unités d'amortissement (7).

7. Le système (1), conformément à n'importe laquelle des revendications précédentes, où les plateformes inférieure (4), intermédiaire (3) et supérieure (2) sont fabriquées en métal.

8. Le système (1), conformément à n'importe laquelle des revendications précédentes, **caractérisé en ce qu'**il possède au moins trois unités d'amortissement (7).

9. Le système (1), conformément à la revendication 8, où les unités d'amortissement (7) comprennent un ou plusieurs dispositifs élastiques (15).

10. Le système (1), conformément à la revendication 9, où les unités d'amortissement (7) sont constituées de deux plaques, supérieure (8) et inférieure (9), entre lesquelles les dispositifs élastiques (15) sont insérés.

11. Le système (1), conformément à la revendication 9 ou 10, où les unités d'amortissement (7) comprennent également des stabilisateurs latéraux (6).

12. Le système (1), conformément à n'importe laquelle des revendications 9 à 11, où les unités d'amortissement (7) possèdent de 2 à 6 dispositifs élastiques (15).

13. Le système (1), conformément à la revendication 12, où les dispositifs d'amortissement (7) possèdent quatre dispositifs élastiques (15).

14. Le système (1), conformément à n'importe laquelle des revendications 9 à 13, où les dispositifs élastiques (15) sont des ressorts.

15. Le système (1), conformément à n'importe laquelle des revendications précédentes, qui comprend également un patin élastique inférieur (5) fixé à la surface inférieure de la plateforme inférieure (4).

16. Le système (1), conformément à la revendication 15, où le patin élastique inférieur (5) est fabriqué en caoutchouc.
